# EUROPÄISCHE PATENTANMELDUNG

(11) **EP 4 234 986 A2**
(43) Veröffentlichungstag der Anmeldung: **30.08.2023**
(21) Anmeldenummer: 23175514.1
(22) Anmeldetag: 02.03.2017
(51) Int. Cl.: F16J 1/00

(54) **DICHTELEMENT UND KOLBENVORRICHTUNG**

(30) Priorität: 04.03.2016 DE 102016203580
(62) Teilanmeldung aus: 17708738.4
(71) Anmelder: ElringKlinger AG, 72581 Dettingen (DE)
(72) Erfinder: Franz, Ralf, 72574 Bad Urach (DE)
(74) Vertreter: DTS Patent- und Rechtsanwälte Schnekenbühl und Partner mbB

(57) **Zusammenfassung**

Um ein Dichtelement bereitzustellen, welches einfach und kostengünstig herstellbar ist und eine effiziente Abdichtung ermöglicht, wird vorgeschlagen, dass das Dichtelement ringförmig ausgebildet ist und einen Grundkörper umfasst, welcher teilweise oder vollständig in einen Elastomerkörper eingebettet ist, wobei der Grundkörper einen parallel zu einer axialen Richtung des Dichtelements verlaufenden hohlzylindrischen Abschnitt umfasst, wobei der hohlzylindrische Abschnitt eine bezüglich einer radialen Richtung innenliegende Innenseite umfasst, welche teilweise oder vollständig von dem Elastomerkörper abgedeckt ist, wobei der Elastomerkörper eine Dichtlippe umfasst, welche in radialer Richtung nach außen oder schräg hierzu von dem Grundkörper weg ragt.

## Beschreibung

Die vorliegende Erfindung betrifft ein Dichtelement, insbesondere zur Verwendung als Bestandteil einer Kolbenvorrichtung oder für eine Kolbenvorrichtung.

Eine Kolbenvorrichtung kann insbesondere Bestandteil einer Getriebeanordnung, beispielsweise eines Automatikgetriebes oder Doppelkupplungsgetriebes für Kraftfahrzeuge, sein.

Ein Dichtelement für eine Kolbenvorrichtung ist beispielsweise aus der DE 10 2009 024 720 A1 bekannt.

Der vorliegenden Erfindung liegt die Aufgabe zugrunde, ein Dichtelement bereitzustellen, welches einfach und kostengünstig herstellbar ist und eine effiziente Abdichtung ermöglicht.

Diese Aufgabe wird erfindungsgemäß durch ein Dichtelement zur Abdichtung zwischen zwei Räumen gelöst, wobei das Dichtelement ringförmig ausgebildet ist und einen Grundkörper umfasst, welcher teilweise oder vollständig in einen Elastomerkörper eingebettet ist, wobei der Grundkörper einen parallel zu einer axialen Richtung des Dichtelements verlaufenden hohlzylindrischen Abschnitt umfasst, wobei der hohlzylindrische Abschnitt eine bezüglich einer radialen Richtung innenliegende Innenseite umfasst, welche teilweise oder vollständig von dem Elastomerkörper abgedeckt ist, wobei der Elastomerkörper eine Dichtlippe umfasst, welche in radialer Richtung nach außen oder schräg hierzu von dem Grundkörper weg ragt.

Dadurch, dass das Dichtelement ringförmig ausgebildet ist und einen in einen Elastomerkörper eingebetteten Grundkörper umfasst, ist ein effizient abdichtendes Dichtelement herstellbar. Insbesondere ist ein solches Dichtelement unabhängig von einem Kolben einer Kolbenvorrichtung herstellbar und an demselben montierbar.

Bei einer Ausgestaltung der Erfindung kann vorgesehen sein, dass der Grundkörper einen L-förmigen Querschnitt aufweist.

Unter einem Querschnitt ist in dieser Beschreibung und den beigefügten Ansprüchen insbesondere ein Schnitt zu verstehen, welcher in einer senkrecht zur Umfangsrichtung des Dichtelements verlaufenden Ebene genommen ist. Die Ebene ist insbesondere eine Ebene, in welcher eine Symmetrieachse des Dichtelements verläuft.

Die Ebene ist insbesondere durch eine radiale Richtung und eine axiale Richtung aufgespannt, insbesondere bezogen auf eine Rotationsachse oder Symmetrieachse des Dichtelements.

Ferner kann vorgesehen sein, dass der Grundkörper einen Z-förmigen Querschnitt aufweist.

Unter einem Z-förmigen Querschnitt ist dabei insbesondere zu verstehen, dass der Grundkörper zwei koaxial zueinander angeordnete hohlzylindrische Abschnitte mit unterschiedlichen Radien oder Durchmessern umfasst, wobei die zwei hohlzylindrischen Abschnitte mittels eines hohlkegelstumpfförmigen oder ringscheibenförmigen Abschnitts miteinander verbunden sind.

Die hohlzylindrischen Abschnitte können dabei abschnittsweise überlappend oder in axialer Richtung versetzt oder beabstandet zueinander angeordnet sein.

Vorteilhaft kann es sein, wenn der Grundkörper und der Elastomerkörper gemeinsam einen C-förmigen oder V-förmigen oder U-förmigen Querschnitt aufweisen.

Insbesondere weisen der Grundkörper und der Elastomerkörper gemeinsam zwei miteinander verbundene Schenkel auf, wobei einer der Schenkel einen hohlzylindrischen Abschnitt umfasst und wobei ein weiterer Schenkel die Dichtlippe umfasst.

Es kann vorgesehen sein, dass der Grundkörper ein metallisches Material umfasst oder aus einem metallischen Material gebildet ist. Insbesondere ist der Grundkörper aus einem Stahlmaterial gebildet. Beispielsweise ist der Grundkörper aus Federstahl gebildet.

Der Grundkörper ist vorzugsweise ein Blechbiegeprodukt und/oder ein Blechstanzprodukt.

Günstig kann es sein, wenn der Elastomerkörper an den Grundkörper angespritzt ist. Beispielsweise kann vorgesehen sein, dass der Elastomerkörper in einem Spritzgießprozess an den Grundkörper angespritzt ist.

Bei einer Ausgestaltung der Erfindung kann vorgesehen sein, dass der Elastomerkörper einen bezüglich einer radialen Richtung innenliegenden Dichtring und einen bezüglich der radialen Richtung außenliegenden Dichtring umfasst, wobei der innenliegende Dichtring einen hohlzylindrischen Abschnitt des Grundkörpers umgibt oder umfasst und/oder wobei der außenliegende Dichtring durch die Dichtlippe gebildet ist.

Die beiden Dichtringe sind insbesondere die zwei Schenkel, die im Querschnitt zur C-Form, V-Form oder U-Form des Grundkörpers und des Elastomerkörpers führen.

Der außenliegende Dichtring, welcher durch die Dichtlippe gebildet ist, ist vorzugsweise ausschließlich durch den Elastomerkörper gebildet.

Insbesondere ragt der Grundkörper nicht in den Bereich der Dichtlippe hinein.

Der innenliegende Dichtring ist vorzugsweise ein Mantel eines Kegelstumpfs.

Der außenliegende Dichtring ist vorzugsweise ein Kegelmantel.

Günstig kann es sein, wenn der innenliegende Dichtring und der außenliegende Dichtring und ein Verbindungsabschnitt zur Verbindung der beiden Dichtringe einstückig oder zweistückig miteinander ausgebildet sind. Insbesondere sind der innenliegende Dichtring und der außenliegende Dichtring sowie der Verbindungsabschnitt ausschließlich durch den Elastomerkörper und den Grundkörper gebildet.

Bei einer Ausgestaltung der Erfindung kann vorgesehen sein, dass eine Materialstärke des Elastomerkörpers ausgehend von der Innenseite des hohlzylindrischen Abschnitts des Grundkörpers radial nach innen gerichtet mindestens ungefähr 0,3 mm, insbesondere mindestens ungefähr 0,5 mm, und/oder höchstens ungefähr 2 mm, insbesondere höchstens ungefähr 1 mm, beispielsweise ungefähr 0,6 mm, beträgt.

Bei einer weiteren Ausgestaltung kann vorgesehen sein, dass die Materialstärke des Elastomerkörpers ausgehend von der Innenseite des hohlzylindrischen Abschnitts des Grundkörpers radial nach innen gerichtet mindestens ungefähr 0,3 mm, insbesondere mindestens ungefähr 0,5 mm, und/oder höchstens ungefähr 3 mm, insbesondere höchstens ungefähr 2 mm, beispielsweise ungefähr 1,5 mm, beträgt.

Vorteilhaft kann es sein, wenn eine Materialstärke des Elastomerkörpers ausgehend von dem Grundkörper in axialer Richtung nach außen hin einseitig oder zweiseitig mindestens ungefähr 0,3 mm, insbesondere mindestens ungefähr 0,5 mm, und/oder höchstens ungefähr 3 mm, insbesondere höchstens ungefähr 2 mm, beispielsweise ungefähr 1 mm oder 1,5 mm, beträgt.

Ein längs der axialen Richtung genommener minimaler Abstand zwischen einer in axialer Richtung tiefsten Stelle einer von der Dichtlippe umgebenen Vertiefung des Elastomerkörpers einerseits und einem in radialer Richtung auf gleicher Höhe wie die tiefste Stelle der Vertiefung angeordneten Abschnitt des Grundkörpers andererseits beträgt vorzugsweise mindestens ungefähr 1 mm, insbesondere mindestens ungefähr 2 mm, und/oder höchstens ungefähr 7 mm, insbesondere höchstens ungefähr 5 mm, beispielsweise ungefähr 3 mm oder 2,7 mm.

Vorteilhaft kann es sein, wenn ein in radialer Richtung äußeres Ende der Dichtlippe in axialer Richtung zwischen zwei einander gegenüberliegenden Enden des hohlzylindrischen Abschnitts des Grundkörpers angeordnet ist. Die mittels der Dichtlippe und dem hohlzylindrischen Abschnitt bewirkten Kräfte führen dann vorzugsweise nicht zu einem Verdrehen des Dichtelements. Vielmehr ist das Dichtelement hierdurch besonders stabil ausgebildet.

Bei einer Ausgestaltung der Erfindung kann vorgesehen sein, dass der Grundkörper sich in radialer Richtung nach außen mindestens bis auf eine Höhe einer in axialer Richtung tiefsten Stelle einer von der Dichtlippe umgebenen Vertiefung des Elastomerkörpers erstreckt.

Alternativ oder ergänzend hierzu kann vorgesehen sein, dass der Grundkörper sich in radialer Richtung nach außen höchstens bis auf eine Höhe eines in radialer Richtung äußeren Rands einer in einem Querschnitt gekrümmten Oberfläche einer von der Dichtlippe umgebenen Vertiefung des Elastomerkörpers erstreckt.

Unter einem "Umgeben der Vertiefung" ist dabei insbesondere zu verstehen, dass sich die Dichtlippe in radialer Richtung nach außen hin an die Vertiefung anschließt.

Vorteilhaft kann es sein, wenn zumindest ein Abschnitt des Elastomerkörpers, welcher sich in radialer Richtung nach innen hin an die in radialer Richtung innenliegende Innenseite des hohlzylindrischen Abschnitts anschließt, eine dem hohlzylindrischen Abschnitt abgewandte unebene und/oder strukturierte Oberflächenstruktur, beispielsweise eine Wellenstruktur, aufweist.

Das Dichtelement eignet sich insbesondere zur Verwendung in einer Kolbenvorrichtung.

Die vorliegende Erfindung betrifft daher auch eine Kolbenvorrichtung.

Die Kolbenvorrichtung eignet sich insbesondere zur Verwendung in einer Getriebeanordnung, beispielsweise einem Automatikgetriebe oder Doppelkupplungsgetriebe eines Kraftfahrzeugs.

Vorzugsweise ist die Kolbenvorrichtung eine Druckkolbenvorrichtung einer Getriebeanordnung.

Die Kolbenvorrichtung umfasst vorzugsweise ein erfindungsgemäßes Dichtelement.

Günstig kann es sein, wenn das Dichtelement an einer radial äußeren Montagefläche eines Kolbens der Kolbenvorrichtung anlegbar oder angelegt ist.

Das Dichtelement ist vorzugsweise mittels eines Presssitzes auf dem Kolben festlegbar.

Günstig kann es sein, wenn der Grundkörper im montierten Zustand des Dichtelements an dem Kolben längs einer Umfangsrichtung auf Zug belastet ist.

Insbesondere wird hierdurch der an der Innenseite des hohlzylindrischen Abschnitts angeordnete Teil des Elastomerkörpers an den Kolben angepresst.

Aufgrund der Verwendung des Grundkörpers ergibt sich vorzugsweise ein über lange Zeit hinweg konstanter Anpressdruck, wodurch letztlich eine hohe Dichtheit des Dichtelements ermöglicht wird.

Alternativ oder ergänzend kann vorgesehen sein, dass das Dichtelement mittels einer stoffschlüssigen Verbindung an dem Kolben, insbesondere der Montagefläche des Kolbens, festgelegt wird oder festgelegt ist.

Beispielsweise kann vorgesehen sein, dass das Dichtelement mittels eines Klebstoffs und/oder eines Haftvermittlers zuverlässig und effizient abdichtend an der Montagefläche des Kolbens festlegbar ist oder festgelegt ist.

Vorzugsweise ergibt sich mittels des Dichtelements an dem Kolben sowohl eine Abdichtung in radialer Richtung als auch in axialer Richtung.

Insbesondere ergibt sich die Abdichtung durch die Anlage des Elastomerkörpers in radialer Richtung und in axialer Richtung an dem Kolben.

Günstig kann es sein, wenn eine in radialer Richtung innenliegende Innenseite des Elastomerkörpers außerhalb eines sich in radialer Richtung innen an den hohlzylindrischen Abschnitt anschließenden Bereichs mit einer unebenen und/oder strukturierten Oberflächenstruktur, beispielsweise einer Wellenstruktur, versehen ist. Hierdurch kann insbesondere eine Mikronoppenstruktur gebildet werden, welche einer optimierten Abdichtung und/oder der Aufnahme von Leckagefluid dient.

Mit Ausnahme von Haltebereichen zur Aufnahme des Grundkörpers in einem Spritzgusswerkzeug ist der Grundkörper vorzugsweise vollständig von dem Elastomerkörper umgeben.

Günstig kann es sein, wenn der Grundkörper vollständig von dem Elastomerkörper umgeben und somit nicht von außen unmittelbar zugänglich ist.

Die Getriebeanordnung kann beispielsweise ein Automatikgetriebe oder ein Doppelkupplungsgetriebe sein.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Draufsicht auf ein Dichtelement für eine Kolbenvorrichtung einer Getriebeanordnung;
- Fig. 2: einen teilweisen Schnitt durch einen Kolben der Kolbenvorrichtung zur Aufnahme des Dichtelements aus Fig. 1;
- Fig. 3: einen schematischen Querschnitt durch das Dichtelement aus Fig. 1 längs der Linie 3-3 in Fig. 1 im verpressten Zustand desselben;
- Fig. 4: eine der Fig. 1 entsprechende schematische Darstellung einer zweiten Ausführungsform eines Dichtelements;
- Fig. 5: eine der Fig. 2 entsprechende schematische Darstellung einer weiteren Ausführungsform eines Kolbens einer Kolbenvorrichtung; und
- Fig. 6: einen schematischen Querschnitt durch das Dichtelement aus Fig. 5 längs der Linie 6-6 in Fig. 4.

Gleiche oder funktional äquivalente Elemente sind in sämtlichen Figuren mit denselben Bezugszeichen versehen.

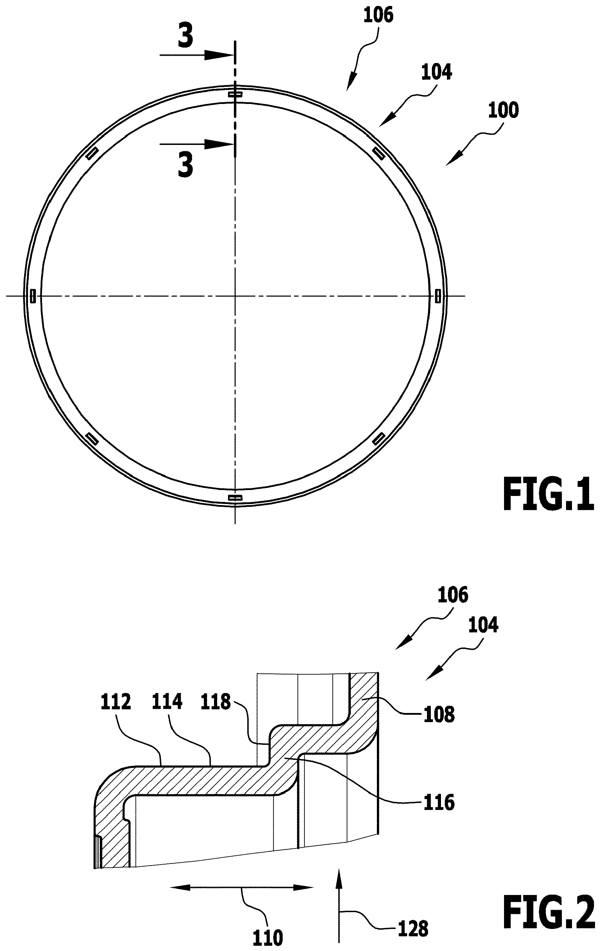

Eine in den Fig. 1 bis 3 dargestellte erste Ausführungsform eines als Ganzes mit 100 bezeichneten Dichtelements dient zur Abdichtung zwischen zwei Räumen 102 und findet insbesondere als Bestandteil einer Kolbenvorrichtung 104 Anwendung.

Die Kolbenvorrichtung 104 ist beispielsweise Bestandteil einer Getriebeanordnung 106, beispielsweise eines Automatikgetriebes oder Doppelkupplungsgetriebes.

Die Kolbenvorrichtung 104 umfasst insbesondere einen Kolben 108, auf welchem das Dichtelement 100 zur Abdichtung festlegbar oder festgelegt ist.

Der Kolben 108 ist insbesondere rotationssymmetrisch um eine (nicht dargestellte) Rotationsachse, welche eine axiale Richtung 110 vorgibt.

Das Dichtelement 100 ist insbesondere an einer der Rotationsachse abgewandten Außenseite 112 des Kolbens 108 an demselben festlegbar.

Der Kolben 108 umfasst dabei eine Montagefläche 114 zur Anordnung und/oder Festlegung des Dichtelements 100.

Der Kolben 108 umfasst ferner einen oder mehrere Versatzbereiche 116, welche in einer radialen Richtung 128 nach außen gegenüber der Montagefläche 114 versetzt sind.

Aufgrund dieses einen oder der mehreren Versatzbereiche 116 ergibt sich angrenzend an die Montagefläche 114 eine vorzugsweise in einer senkrecht zur axialen Richtung 110 verlaufenen Ebene angeordnete Anlagefläche 118 des Kolbens 108.

An diese Anlagefläche 118 ist das Dichtelement 100 vorzugsweise in axialer Richtung 110 anlegbar.

Das Dichtelement 100 kann beispielsweise unmittelbar an dem Kolben 108 festgelegt sein, indem dieses an dem Kolben 108 hergestellt, beispielsweise an den Kolben 108 angespritzt, wird.

Vorzugsweise ist das Dichtelement 100 jedoch ein von dem Kolben 108 verschiedenes und separat hergestelltes Element.

Das Dichtelement 100 umfasst vorzugsweise einen Grundkörper 120, welcher beispielsweise ein Blechbiegeprodukt 122 und/oder ein Blechstanzprodukt 124 ist.

Der Grundkörper 120 umfasst vorzugsweise einen oder mehrere hohlzylindrische Abschnitte 126.

Bei der in den Fig. 1 bis 3 dargestellten ersten Ausführungsform des Dichtelements 100 umfasst der Grundkörper 120 zwei im wesentlichen hohlzylindrische Abschnitte 126, welche in axialer Richtung 110 und in radialer Richtung 128 versetzt zueinander angeordnet sind.

Die beiden hohlzylindrischen Abschnitte 126 sind dabei mittels eines hohlkegelstumpfförmigen Abschnitts 130 miteinander verbunden.

Mittels des hohlkegelstumpfförmigen Abschnitts 130 und der daran angrenzenden hohlzylinderförmigen Abschnitte 126 ist insbesondere eine Z-Form des Grundkörpers 120 gebildet.

Der Grundkörper 120 ist insbesondere aus einem metallischen Material, beispielsweise Federstahl, gebildet.

Das Dichtelement 100 umfasst ferner einen Elastomerkörper 132, welcher insbesondere aus einem elastomeren Kunststoffmaterial gebildet ist.

Der Grundkörper 120 ist vorzugsweise in den Elastomerkörper 132 eingebettet.

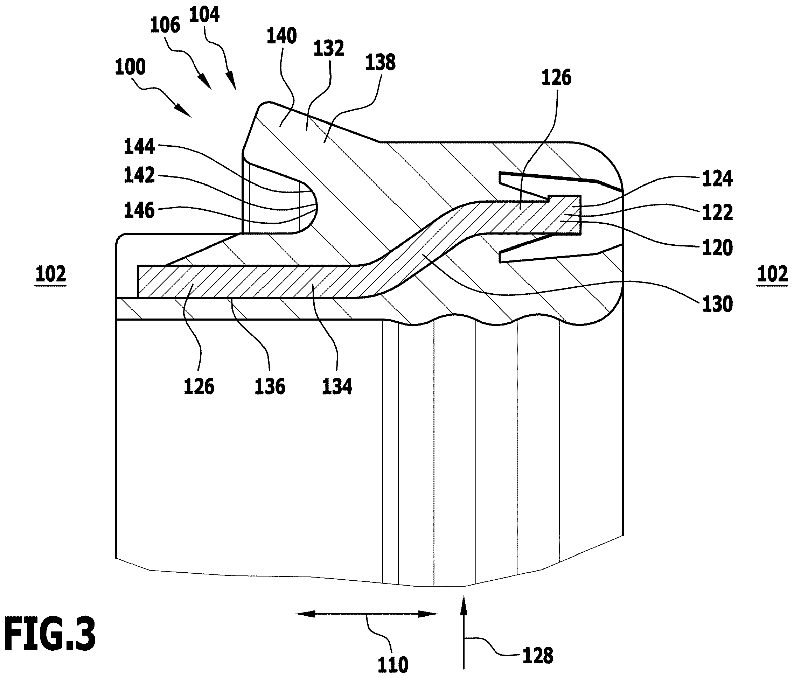

Insbesondere kann vorgesehen sein, dass der Grundkörper 120 im Wesentlichen vollständig von dem Elastomerkörper 132 umgeben ist. Lediglich die beispielsweise in Fig. 3 ersichtlichen Aussparungen, welche zur Herstellung des Dichtelements 100 erforderlich sein können, ermöglichen einen direkten Zugang zu dem Grundkörper 120.

Das gesamte Dichtelement 100 ist vorzugsweise im Wesentlichen rotationssymmetrisch um eine (nicht dargestellte) Rotationsachse ausgebildet.

Die Rotationsachse des Dichtelements 100 ist vorzugsweise dieselbe Rotationsachse wie diejenige des Kolbens 108.

Der Elastomerkörper 132 bildet gemeinsam mit dem Grundkörper 120 einen innenliegenden Dichtring 134.

Mit diesem innenliegenden Dichtring 134 wird im montierten Zustand des Dichtelements 100 insbesondere eine Abdichtung in radialer Richtung 128 nach innen erzielt.

Für die in radialer Richtung 128 nach innen gerichtete Abdichtung auf dem Kolben 108 dient insbesondere der radial weiter innenliegend angeordnete hohlzylindrische Abschnitt 126 des Grundkörpers 120 gemeinsam mit einem den hohlzylindrischen Abschnitt 126 auf dessen Innenseite 136 abdeckenden Teil des Elastomerkörpers 132.

Der Elastomerkörper 132 bildet somit an der Innenseite 136 des hohlzylindrischen Abschnitts 126 eine Elastomerbeschichtung, welche als Dichtung fungiert.

Der Grundkörper 120, insbesondere der radial innenliegende hohlzylindrische Abschnitt 126 des Grundkörpers 120, sowie der an der Innenseite 136 des Grundkörpers 120, insbesondere des radial inneren hohlzylindrischen Abschnitts 126 des Grundkörpers 120, angeordnete Abschnitt des Elastomerkörpers 132 sind so dimensioniert, dass das gesamte Dichtelement 100 mittels eines Presssitzes auf der Montagefläche 114 des Kolbens 108 festlegbar ist.

Für eine optimierte Dichtwirkung kann vorgesehen sein, dass eine dem Grundkörper 120 abgewandte radial innenliegende Oberfläche des Elastomerkörpers 132 zumindest abschnittsweise mit einer Struktur, beispielsweise einer Wellenstruktur, versehen ist.

Im Bereich des radial inneren hohlzylindrischen Abschnitts 126 dient diese Struktur insbesondere einer optimierten Dichtwirkung durch gezieltes Verpressen der Struktur. Im übrigen Teil des Elastomerkörpers 132 kann die Struktur insbesondere als Mikronoppenstruktur zur Haftungsoptimierung und/oder Aufnahme von Leckagefluid dienen.

Das Dichtelement 100 umfasst ferner einen außenliegenden Dichtring 138.

Mittels dieses außenliegenden Dichtrings 138 ist insbesondere eine Abdichtung in radialer Richtung 128 nach außen realisierbar.

Der außenliegende Dichtring 138 ist insbesondere durch eine Dichtlippe 140 des Dichtelements 100 gebildet.

Diese Dichtlippe 140 ragt insbesondere schräg zur radialen Richtung 128 und schräg zur axialen Richtung 110 von dem Grundkörper 120 weg.

Die Dichtlippe 140 ist dabei insbesondere ausschließlich durch den Elastomerkörper 132 und somit ausschließlich durch ein Elastomermaterial gebildet.

Insbesondere aufgrund der Form der Dichtlippe 140 und deren Anordnung relativ zu dem restlichen Teil des Elastomerkörpers 132 ergibt sich eine Vertiefung 142 im Elastomerkörper 132.

Diese Vertiefung 142 weist insbesondere eine bereichsweise gekrümmte Oberfläche 144 auf.

Der Bereich des Elastomerkörpers 132, welcher die gekrümmte Oberfläche 144 aufweist, ist insbesondere derjenige Bereich des Elastomerkörpers 132, welcher bei einem Einfedern der Dichtlippe 140 in radialer Richtung 128 nach innen gerichtet komprimiert wird.

Zur Stabilisierung des Elastomerkörpers 132 ist vorzugsweise der Grundkörper 120 vorgesehen.

Insbesondere erstreckt sich der Grundkörper 120 in radialer Richtung 128 vorzugsweise soweit nach außen, dass das in radialer Richtung 128 äußerste Endes des Grundkörpers 120 mindestens auf der Höhe einer bezüglich der axialen Richtung 110 tiefsten Stelle 146 der Vertiefung 142 angeordnet ist.

Da eine zu weite Erstreckung des Grundkörpers 120 in radialer Richtung 128 nach außen eine zu steife Ausgestaltung des außenliegenden Dichtrings 138 zur Folge haben kann, endet der Grundkörper 120 mit seinem in radialer Richtung 128 äußersten Ende vorzugsweise in radialer Richtung 128 vor einem in radialer Richtung 128 äußeren Ende oder Rand der gekrümmten Oberfläche 144 der Vertiefung 142.

Ein in axialer Richtung 110 genommener Abstand zwischen der tiefsten Stelle 146 der Vertiefung 142 und einem exakt in axialer Richtung 110 auf die tiefste Stelle 146 folgenden Abschnitt des Grundkörpers 120 beträgt vorzugsweise zwischen ungefähr 2 mm und ungefähr 5 mm, insbesondere ungefähr 3 mm.

Die Materialstärke des Elastomerkörpers 132 auf der Innenseite 136 des radial innenliegenden hohlzylindrischen Abschnitts 126 beträgt vorzugsweise zwischen ungefähr 0,3 mm und ungefähr 2 mm, beispielsweise ungefähr 0,6 mm.

Insbesondere in Richtung der Anlagefläche 118 des Kolbens 108 erstreckt sich der Elastomerkörper 132 um vorzugsweise mindestens ungefähr 0,3 mm, beispielsweise 1 mm, in axialer Richtung 110 über den Grundkörper 120 hinaus. Eine maximale Materialstärke in axialer Richtung 110 ausgehend von dem Grundkörper 120 beträgt dabei vorzugsweise höchstens ungefähr 3 mm.

Zur Montage des Dichtelements 100 auf der Montagefläche 114 kann beispielsweise ein Haftvermittlermaterial auf der Montagefläche 114 und/oder auf dem Dichtelement 100 angeordnet sein.

Alternativ und/oder ergänzend zu einem Haftvermittlermaterial kann ein Klebstoff vorgesehen sein.

Vorzugsweise ergibt sich jedoch insbesondere aufgrund des Presssitzes eine stabile Verbindung zwischen dem Dichtelement 100 und dem Kolben 108.

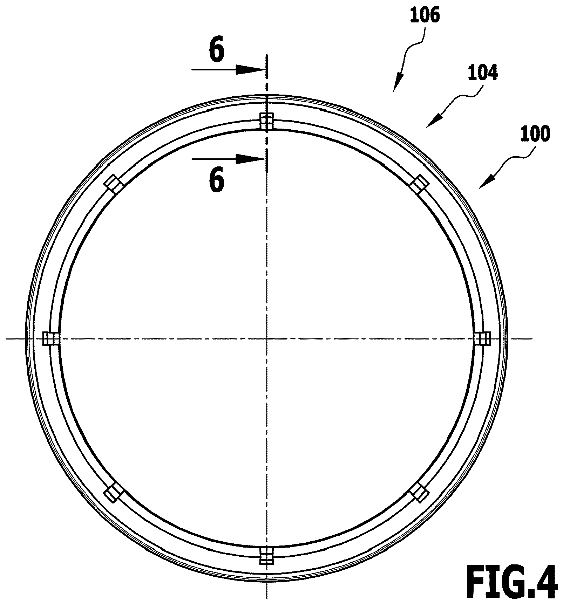

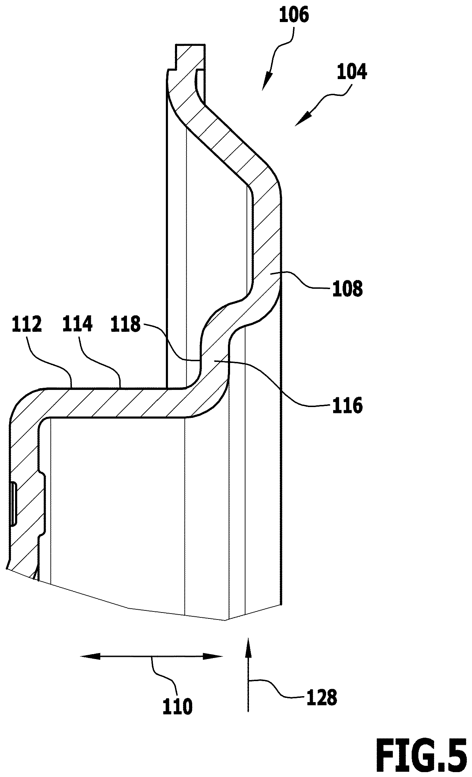

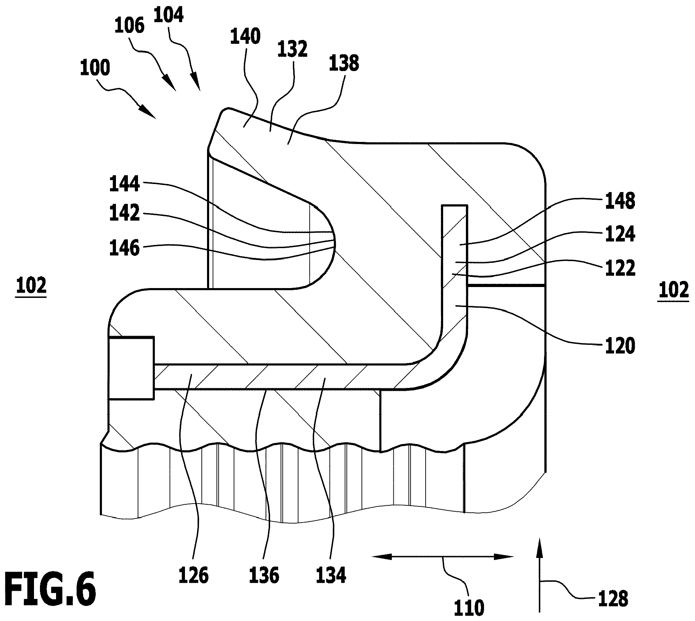

Eine in den Fig. 4 bis 6 dargestellte zweite Ausführungsform eines Dichtelements 100 und eines Kolbens 108 unterscheidet sich von der in den Fig. 1 bis 3 dargestellten ersten Ausführungsform im Wesentlichen dadurch, dass der Grundkörper 120 lediglich einen hohlzylindrischen Abschnitt 126 umfasst, an welchen sich ein radial nach außen ragender ringscheibenförmiger Abschnitt 148 anschließt.

Der Grundkörper 120 ist somit bei der in den Fig. 4 bis 6 dargestellten zweiten Ausführungsform im Wesentlichen L-förmig.

Der Kolben 108 weist vorzugsweise ebenfalls eine etwas andere Geometrie auf.

Eine Materialstärke in radialer Richtung 128 an der Innenseite 136 des hohlzylindrischen Abschnitts 126 beträgt dabei vorzugsweise ungefähr 1,5 mm.

Ein in axialer Richtung 110 genommener Abstand zwischen der tiefsten Stelle 146 der Vertiefung 142 und dem ringscheibenförmigen Abschnitt 148 beträgt vorzugsweise zwischen ungefähr 2 mm und ungefähr 5 mm, insbesondere ungefähr 2,7 mm.

Eine Materialstärke des Elastomerkörpers 132 in axialer Richtung 110 auf der dem hohlzylindrischen Abschnitt 126 abgewandten Seite des ringscheibenförmigen Abschnitts 148 beträgt vorzugsweise zwischen ungefähr 0,3 mm und ungefähr 3 mm, insbesondere ungefähr 1,5 mm.

Im Übrigen stimmt die in den Fig. 4 bis 6 dargestellte zweite Ausführungsform eines Dichtelements 100 und/oder eines Kolbens 108 hinsichtlich Aufbau und Funktion mit der in den Fig. 1 bis 3 dargestellten ersten Ausführungsform überein, so dass auf deren vorstehende Beschreibung insoweit Bezug genommen wird.

### Ausführungsformen:

1. Dichtelement (100) zur Abdichtung zwischen zwei Räumen (102), wobei das Dichtelement (100) ringförmig ausgebildet ist und einen Grundkörper (120) umfasst, welcher teilweise oder vollständig in einen Elastomerkörper (132) eingebettet ist, wobei der Grundkörper (120) einen parallel zu einer axialen Richtung (110) des Dichtelements (100) verlaufenden hohlzylindrischen Abschnitt (126) umfasst,
   wobei der hohlzylindrische Abschnitt (126) eine bezüglich einer radialen Richtung (128) innenliegende Innenseite (136) umfasst, welche teilweise oder vollständig von dem Elastomerkörper (132) abgedeckt ist, wobei der Elastomerkörper (132) eine Dichtlippe (140) umfasst, welche in radialer Richtung (128) nach außen oder schräg hierzu von dem Grundkörper (120) weg ragt.
2. Dichtelement (100) nach Ausführungsform 1, dadurch gekennzeichnet, dass der Grundkörper (120) einen L-förmigen Querschnitt aufweist.
3. Dichtelement (100) nach Ausführungsform 1, dadurch gekennzeichnet, dass der Grundkörper (120) einen Z-förmigen Querschnitt aufweist.
4. Dichtelement (100) nach einer der Ausführungsformen 1 bis 3, dadurch gekennzeichnet, dass der Grundkörper (120) und der Elastomerkörper (132) gemeinsam einen C-förmigen oder V-förmigen oder U-förmigen Querschnitt aufweisen.
5. Dichtelement (100) nach einer der Ausführungsformen 1 bis 4, dadurch gekennzeichnet, dass der Grundkörper (120) ein metallisches Material umfasst oder aus einem metallischen Material gebildet ist.
6. Dichtelement (100) nach einer der Ausführungsformen 1 bis 5, dadurch gekennzeichnet, dass der Grundkörper (120) ein Blechbiegeprodukt (122) und/oder ein Blechstanzprodukt (124) ist.
7. Dichtelement (100) nach einer der Ausführungsformen 1 bis 6, dadurch gekennzeichnet, dass der Elastomerkörper (132) an den Grundkörper (120) angespritzt ist, insbesondere in einem Spritzgießprozess und/oder Formpressprozess (compression molding).
8. Dichtelement (100) nach einer der Ausführungsformen 1 bis 7, dadurch gekennzeichnet, dass der Elastomerkörper (132) einen bezüglich einer radialen Richtung (128) innenliegenden Dichtring (134) und einen bezüglich der radialen Richtung (128) außenliegenden Dichtring (138) umfasst, wobei der innenliegende Dichtring (134) einen hohlzylindrischen Abschnitt (126) des Grundkörpers (120) umgibt und/oder wobei der außenliegende Dichtring (138) durch die Dichtlippe (140) gebildet ist.
9. Dichtelement (100) nach Ausführungsform 8, dadurch gekennzeichnet, dass der innenliegende Dichtring (134) und der außenliegende Dichtring (138) und ein Verbindungsabschnitt zur Verbindung der beiden Dichtringe (134, 138) einstückig oder zweistückig miteinander ausgebildet sind.
10. Dichtelement (100) nach einer der Ausführungsformen 1 bis 9, dadurch gekennzeichnet, dass eine Materialstärke des Elastomerkörpers (132) ausgehend von der Innenseite (136) des hohlzylindrischen Abschnitts (126) des Grundkörpers (120) radial nach innen gerichtet mindestens ungefähr 0,3 mm, insbesondere mindestens ungefähr 0,5 mm, und/oder höchstens ungefähr 2 mm, insbesondere höchstens ungefähr 1 mm, beispielsweise ungefähr 0,6 mm, beträgt.
11. Dichtelement (100) nach einer der Ausführungsformen 1 bis 10, dadurch gekennzeichnet, dass eine Materialstärke des Elastomerkörpers (132) ausgehend von dem Grundkörper (120) in axialer Richtung (110) nach außen hin einseitig oder zweiseitig mindestens ungefähr 0,3 mm, insbesondere mindestens ungefähr 0,5 mm, und/oder höchstens ungefähr 3 mm, insbesondere höchstens ungefähr 2 mm, beispielsweise ungefähr 1 mm, beträgt.
12. Dichtelement (100) nach einer der Ausführungsformen 1 bis 11, dadurch gekennzeichnet, dass ein längs der axialen Richtung (110) genommener minimaler Abstand zwischen einer in axialer Richtung (110) tiefsten Stelle (146) einer von der Dichtlippe (140) umgebenen Vertiefung (142) des Elastomerkörpers (132) einerseits und einem in radialer Richtung (128) auf gleicher Höhe wie die tiefste Stelle (146) der Vertiefung (142) angeordneten Abschnitt des Grundkörpers (120) andererseits mindestens ungefähr 1 mm, insbesondere mindestens ungefähr 2 mm, und/oder höchstens ungefähr 7 mm, insbesondere höchstens ungefähr 5 mm, beispielsweise ungefähr 3 mm, beträgt.
13. Dichtelement (100) nach einer der Ausführungsformen 1 bis 12, dadurch gekennzeichnet, dass ein in radialer Richtung (128) äußeres Ende der Dichtlippe (140) in axialer Richtung (110) zwischen zwei einander gegenüberliegenden Enden des hohlzylindrischen Abschnitts (126) des Grundkörpers (120) angeordnet ist.
14. Dichtelement (100) nach einer der Ausführungsformen 1 bis 13, dadurch gekennzeichnet, dass der Grundkörper (120) sich in radialer Richtung (128) nach außen
   (i) mindestens bis auf eine Höhe einer in axialer Richtung (110) tiefsten Stelle (146) einer von der Dichtlippe (140) umgebenen Vertiefung (142) des Elastomerkörpers (132) und/oder
   (ii) höchstens bis auf eine Höhe eines in radialer Richtung (128) äußeren Rands einer in einem Querschnitt gekrümmten Oberfläche (144) einer von der Dichtlippe (140) umgebenen Vertiefung (142) des Elastomerkörpers (132) erstreckt.
15. Dichtelement (100) nach einer der Ausführungsformen 1 bis 14, dadurch gekennzeichnet, dass zumindest ein Abschnitt des Elastomerkörpers (132), welcher sich in radialer Richtung (128) nach innen hin an die in radialer Richtung (128) innenliegende Innenseite (136) des hohlzylindrischen Abschnitts (126) anschließt, eine dem hohlzylindrischen Abschnitt (126) abgewandte unebene und/oder strukturierte Oberflächenstruktur, beispielsweise eine Wellenstruktur, aufweist.
16. Kolbenvorrichtung (104), insbesondere zur Verwendung in einer Getriebeanordnung (106), wobei die Kolbenvorrichtung (104) ein Dichtelement (100) nach einer der Ausführungsformen 1 bis 15 umfasst.
17. Kolbenvorrichtung (104) nach Ausführungsform 16, dadurch gekennzeichnet, dass das Dichtelement (100) an einer radial äußeren Montagefläche (114) eines Kolbens (108) der Kolbenvorrichtung (104) anlegbar oder angelegt ist.
18. Kolbenvorrichtung (104) nach Ausführungsform 17, dadurch gekennzeichnet, dass der Grundkörper (120) im montierten Zustand des Dichtelements (100) an dem Kolben (108) längs einer Umfangsrichtung auf Zug belastet ist.

## Patentansprüche

1. Dichtelement (100) zur Abdichtung zwischen zwei Räumen (102), wobei das Dichtelement (100) sich zur Verwendung in einer Kolbenvorrichtung (104) eignet, wobei das Dichtelement (100) ringförmig ausgebildet ist und einen Grundkörper (120) umfasst, welcher teilweise oder vollständig in einen Elastomerkörper (132) eingebettet ist, wobei der Grundkörper (120) einen parallel zu einer axialen Richtung (110) des Dichtelements (100) verlaufenden hohlzylindrischen Abschnitt (126) umfasst,
wobei der hohlzylindrische Abschnitt (126) eine bezüglich einer radialen Richtung (128) innenliegende Innenseite (136) umfasst, welche teilweise oder vollständig von dem Elastomerkörper (132) abgedeckt ist, wobei der Elastomerkörper (132) eine Dichtlippe (140) umfasst, welche in radialer Richtung (128) nach außen oder schräg hierzu von dem Grundkörper (120) weg ragt,
wobei das Dichtelement (100) an einer radial äußeren Montagefläche (114) eines Kolbens (108) der Kolbenvorrichtung (104) anlegbar ist.

2. Dichtelement (100) nach Anspruch 1, **dadurch gekennzeichnet, dass** der Grundkörper (120) einen L-förmigen Querschnitt aufweist.

3. Dichtelement (100) nach Anspruch 1, **dadurch gekennzeichnet, dass** der Grundkörper (120) einen Z-förmigen Querschnitt aufweist.

4. Dichtelement (100) nach einem der Ansprüche 1 bis 3, **dadurch gekennzeichnet, dass** der Grundkörper (120) und der Elastomerkörper (132) gemeinsam einen C-förmigen oder V-förmigen oder U-förmigen Querschnitt aufweisen.

5. Dichtelement (100) nach einem der Ansprüche 1 bis 4, **dadurch gekennzeichnet, dass** der Grundkörper (120) ein metallisches Material umfasst oder aus einem metallischen Material gebildet ist,
wobei optional der Grundkörper (120) ein Blechbiegeprodukt (122) und/oder ein Blechstanzprodukt (124) sein kann.

6. Dichtelement (100) nach einem der Ansprüche 1 bis 5, **dadurch gekennzeichnet, dass** der Elastomerkörper (132) an den Grundkörper (120) angespritzt ist, insbesondere in einem Spritzgießprozess und/oder Formpressprozess (compression molding).

7. Dichtelement (100) nach einem der Ansprüche 1 bis 6, **dadurch gekennzeichnet, dass** der Elastomerkörper (132) einen bezüglich einer radialen Richtung (128) innenliegenden Dichtring (134) und einen bezüglich der radialen Richtung (128) außenliegenden Dichtring (138) umfasst, wobei der innenliegende Dichtring (134) einen hohlzylindrischen Abschnitt (126) des Grundkörpers (120) umgibt und/oder wobei der außenliegende Dichtring (138) durch die Dichtlippe (140) gebildet ist, wobei optional der innenliegende Dichtring (134) und der außenliegende Dichtring (138) und ein Verbindungsabschnitt zur Verbindung der beiden Dichtringe (134, 138) einstückig oder zweistückig miteinander ausgebildet sein können.

8. Dichtelement (100) nach einem der Ansprüche 1 bis 7, **dadurch gekennzeichnet, dass** eine Materialstärke des Elastomerkörpers (132) ausgehend von der Innenseite (136) des hohlzylindrischen Abschnitts (126) des Grundkörpers (120) radial nach innen gerichtet mindestens ungefähr 0,3 mm, insbesondere mindestens ungefähr 0,5 mm, und/oder höchstens ungefähr 2 mm, insbesondere höchstens ungefähr 1 mm, beispielsweise ungefähr 0,6 mm, beträgt.

9. Dichtelement (100) nach einem der Ansprüche 1 bis 8, **dadurch gekennzeichnet, dass** eine Materialstärke des Elastomerkörpers (132) ausgehend von dem Grundkörper (120) in axialer Richtung (110) nach außen hin einseitig oder zweiseitig mindestens ungefähr 0,3 mm, insbesondere mindestens ungefähr 0,5 mm, und/oder höchstens ungefähr 3 mm, insbesondere höchstens ungefähr 2 mm, beispielsweise ungefähr 1 mm, beträgt.

10. Dichtelement (100) nach einem der Ansprüche 1 bis 9, **dadurch gekennzeichnet, dass** ein längs der axialen Richtung (110) genommener minimaler Abstand zwischen einer in axialer Richtung (110) tiefsten Stelle (146) einer von der Dichtlippe (140) umgebenen Vertiefung (142) des Elastomerkörpers (132) einerseits und einem in radialer Richtung (128) auf gleicher Höhe wie die tiefste Stelle (146) der Vertiefung (142) angeordneten Abschnitt des Grundkörpers (120) andererseits mindestens ungefähr 1 mm, insbesondere mindestens ungefähr 2 mm, und/oder höchstens ungefähr 7 mm, insbesondere höchstens ungefähr 5 mm, beispielsweise ungefähr 3 mm, beträgt.

11. Dichtelement (100) nach einem der Ansprüche 1 bis 10, **dadurch gekennzeichnet, dass** ein in radialer Richtung (128) äußeres Ende der Dichtlippe (140) in axialer Richtung (110) zwischen zwei einander gegenüberliegenden Enden des hohlzylindrischen Abschnitts (126) des Grundkörpers (120) angeordnet ist.

12. Dichtelement (100) nach einem der Ansprüche 1 bis 11, **dadurch gekennzeichnet, dass** der Grundkörper (120) sich in radialer Richtung (128) nach außen
(i) mindestens bis auf eine Höhe einer in axialer Richtung (110) tiefsten Stelle (146) einer von der Dichtlippe (140) umgebenen Vertiefung (142) des Elastomerkörpers (132) und/oder
(ii) höchstens bis auf eine Höhe eines in radialer Richtung (128) äußeren Rands einer in einem Querschnitt gekrümmten Oberfläche (144) einer von der Dichtlippe (140) umgebenen Vertiefung (142) des Elastomerkörpers (132) erstreckt.

13. Dichtelement (100) nach einem der Ansprüche 1 bis 12, **dadurch gekennzeichnet, dass** zumindest ein Abschnitt des Elastomerkörpers (132), welcher sich in radialer Richtung (128) nach innen hin an die in radialer Richtung (128) innenliegende Innenseite (136) des hohlzylindrischen Abschnitts (126) anschließt, eine dem hohlzylindrischen Abschnitt (126) abgewandte unebene und/oder strukturierte Oberflächenstruktur, beispielsweise eine Wellenstruktur, aufweist.

14. Kolbenvorrichtung (104), insbesondere zur Verwendung in einer Getriebeanordnung (106), wobei die Kolbenvorrichtung (104) ein Dichtelement (100) zur Abdichtung zwischen zwei Räumen (102) umfasst, wobei das Dichtelement (100) an einer radial äußeren Montagefläche (114) eines Kolbens (108) der Kolbenvorrichtung (104) anlegbar oder angelegt ist, wobei das Dichtelement (100) ringförmig ausgebildet ist und einen Grundkörper (120) umfasst, welcher teilweise oder vollständig in einen Elastomerkörper (132) eingebettet ist, wobei der Grundkörper (120) einen parallel zu einer axialen Richtung (110) des Dichtelements (100) verlaufenden hohlzylindrischen Abschnitt (126) umfasst,
wobei der hohlzylindrische Abschnitt (126) eine bezüglich einer radialen Richtung (128) innenliegende Innenseite (136) umfasst, welche teilweise oder vollständig von dem Elastomerkörper (132) abgedeckt ist, wobei der Elastomerkörper (132) eine Dichtlippe (140) umfasst, welche in radialer Richtung (128) nach außen oder schräg hierzu von dem Grundkörper (120) weg ragt.

15. Kolbenvorrichtung (104) nach Anspruch 14, **dadurch gekennzeichnet, dass** der Grundkörper (120) im montierten Zustand des Dichtelements (100) an dem Kolben (108) längs einer Umfangsrichtung auf Zug belastet ist.
